# EUROPÄISCHE PATENTSCHRIFT

(11) **EP 1 423 830 B1**
(45) Veröffentlichungstag und Bekanntmachung des Hinweises auf die Patenterteilung: **14.11.2012**
(21) Anmeldenummer: 02711736.5
(22) Anmeldetag: 25.02.2002
(51) Int. Cl.: G07F 7/10, G06K 19/07

(54) **VERFAHREN ZUM BETRIEB VON BERÜHRUNGSLOSEN IDENTIFIKATIONSMEDIEN**
METHOD FOR OPERATING NON-CONTACT IDENTIFICATION MEDIA
PROCEDE D'EXPLOITATION DE SUPPORTS D'IDENTIFICATION SANS CONTACT

(30) Priorität: 26.02.2001 CH 337012001
(43) Veröffentlichungstag der Anmeldung: 02.06.2004
(73) Patentinhaber: Legic Identsystems AG, 8623 Wetzikon (CH)
(72) Erfinder: KLOSA, Klaus, Ulrich, CH-8627 Grüningen (CH); PETIGNAT, Guy, CH-8704 Herrliberg (CH)
(74) Vertreter: Frei, Alexandra Sarah
(86) Internationale Anmeldenummer: PCT/CH2002/000107
(87) Internationale Veröffentlichungsnummer: WO 2002/069285

(56) Entgegenhaltungen:
- EP-A- 0 933 733
- EP-A- 1 096 422
- WO-A-00/67100

## Beschreibung

Die Erfindung betrifft ein Verfahren zum Betrieb von berührungslosen Identifikationsmedien in einem System mit Kontakt-Applikationen für Kontaktkarten gemäss Patentanspruch 1, ein Konvertermodul nach Anspruch 16 und eine Anlage nach Anspruch 30. Kontaktkarten-Systeme mit Kontakt-Identifikationsmedien sind weit verbreitet und für verschiedene Applikationen bekannt, z.B. als Zutrittskarten für bestimmte Bereiche einer Firma, für die Zeitwirtschaft, als Zugangsmedien für die Benützung von Geräten, z.B. Datenanlagen, als Kreditkarten und auch als Wertkarten zum Bezug von Leistungen verschiedenster Art.

Es besteht zunehmend der Wunsch bzw. die Forderung in solchen Systemen zusätzlich auch berührungslose Identifikationsmedien einsetzen zu können, um deren grosse Vorteile vor allem bezüglich Handling wie auch bezüglich möglicher Erweiterungen von Applikationen nutzen zu können.

Dazu musste bisher zusätzlich eine berührungslose RF-Applikation mit RF-Lesestationen für berührungslose Kommunikation in das System integriert werden. Dies erfordert eine Kommunikationsschnittstelle zum bestehenden Kontaktsystem im Host und zu lokalen Steuergeräten der Kontakt-Applikationen an den Schreib/Lesestationen, es sind die spezifischen Kommandos der RF-Lesestation zu programmieren, und die physische Integration des RF-Systems, inklusive Versorgungsanschlüssen, ist auszuführen.

Der Aufwand für die Integration solcher zusätzlicher RF-Lesestationen wird damit relativ hoch und entsprechend teuer.

Eine andere Möglichkeit zur Einführung berührungsloser Identifikationsmedien besteht darin, Hybrid-Medien einzusetzen, welche beide Kommunikationsarten enthalten. Hier ist im Prinzip eine Kontaktkarte für ein Kontakt-Kommunikationssystem mit einem berührungslosen Identifikationsmedium für berührungslose Kommunikation in einer Karte im Format der Kontaktkarte integriert. Solche Hybrid-Karten mit Doppelfunktion sind jedoch aufwendig und entsprechend teuer und das Problem der Wartung zweier verschiedener Systeme im Host bleibt ebenfalls bestehen.

Es ist nun Aufgabe der vorliegende Erfindung eine viel einfachere und kostengünstigere Ergänzung von Kontaktkarten-Systemen mit berührungslosen Identifikationsmedien zu schaffen und dazu Verfahren und Vorrichtungen anzugeben, welche mit viel geringerem Aufwand die Verwendung von berührungslosen Identifikationsmedien in einem solchen Kontaktkarten-System ermöglichen und welche auch eine schrittweise Transformation in ein berührungsloses System erlauben.

Diese Aufgabe wird gelöst mit einem Verfahren nach Anspruch 1 und einer Vorrichtung nach Anspruch 16.

Mit dem initialisierten Konvertermodul wird die Kommunikation mit den initialisierten berührungslosen Identifikationsmedien in eine Kontaktkommunikation umgewandelt bzw. übersetzt, welche an der Schnittstelle S zum Hostcomputer genau der Kontaktkommunikation und -Information des bisherigen Systems entspricht, d.h. an der Schnittstelle S erscheint für das System eine identische Kommunikation wie mit den Kontaktkarten. Die Kontakt-Lesegeräte und die Schnittstelle zum Host erhalten damit auch für berührungslose Identifikationsmedien genau dieselbe Kommunikation wie für Kontaktkarten, d.h. seitens des bisherigen Systems mit Host, Kontakt-Applikationen, Kontakt-Lesegeräten und Kontakt-Betriebssystem sind keine Änderungen erforderlich. Das Kontaktkarten Betriebssystem wird hier im Prinzip in das Konvertermodul integriert.

Die abhängigen Ansprüche betreffen vorteilhafte Weiterbildungen der Erfindung. Im Folgenden wird die Erfindung anhand von Figuren und Beispielen weiter erläutert. Es zeigen:
- Fig. 1a: ein System mit Host, Kontaktkarten-Schreib/Lesestation, Kontaktkarten und dazwischen liegender Schnittstelle mit entsprechender Kontakt-Kommunikation,
- Fig. 2a: eine erfindungsgemässe Ergänzung mit einem initialisierten Konvertermodul für die Kommunikation mit initialisierten berührungslosen Identifikationsmedien einerseits und mit einer Kontaktkarten-Schreib/Lesestation andererseits,
- Fig. 3a: eine initialisierte Schreib/Lesestation mit einem Konvertermodul für die Kommunikation mit berührungslosen Identifikationsmedien und mit einer Kontaktschnittstelle zum Host,
- Fig. 4a: ein System mit einer Schreib/Lesestation zur Kommunikation mit Kontakt-Applikationen wie auch mit berührungslosen Applikationen in berührungslosen Identifikationsmedien

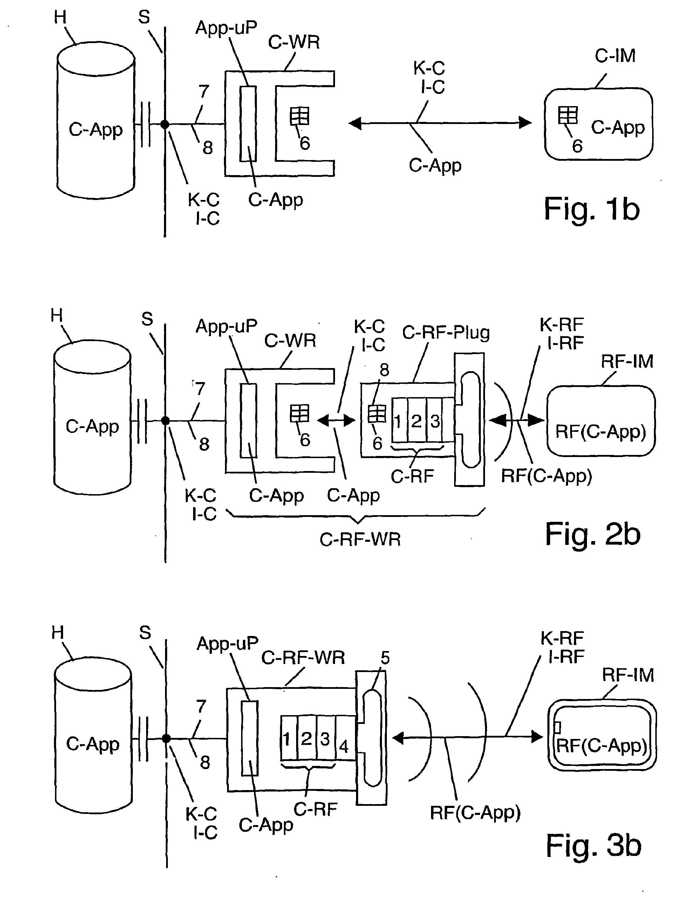

- Fig. 1b-4b: Varianten mit einem integrierten Applikationsrechner in den Lesestationen und mit temporärer Verbindung zum Host,

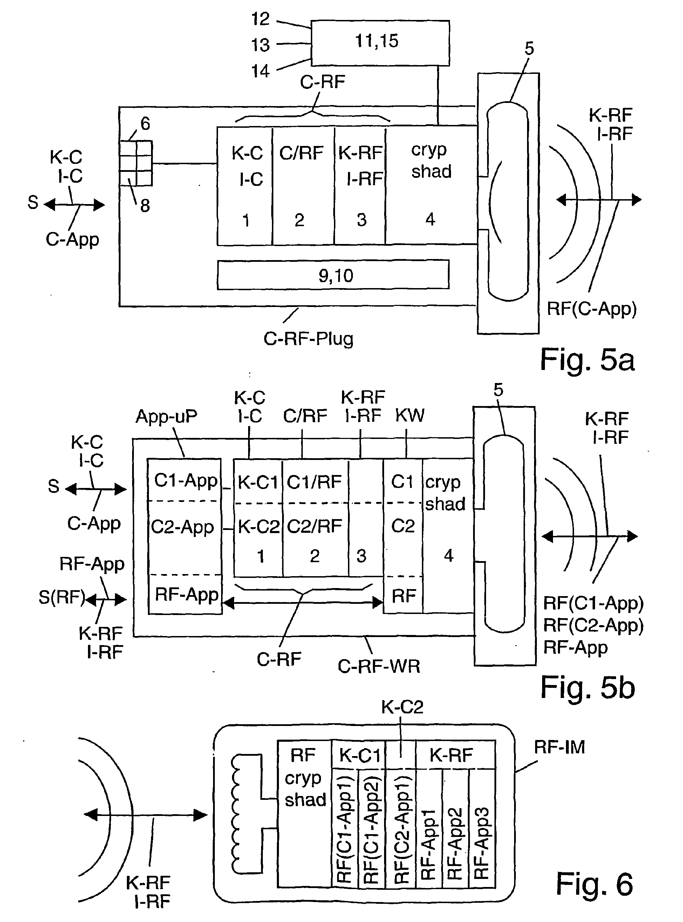

- Fig. 5a: den Aufbau eines Konvertermoduls mit einem RF-Sender/Empfänger als Einsteckmodul in eine Kontaktkarten-Schreib/Lesestation,
- Fig. 5b: den Aufbau einer berührungslosen Schreib/Lesestation mit integriertem Konvertermodul und einem Applikationsrechner sowie mit einer zusätzlichen berührungslosen Kommunikation für berührungslose Applikationen,
- Fig. 6: ein zugeordnetes berührungsloses Identifikationsmedium mit mehreren unabhängigen Applikationen,

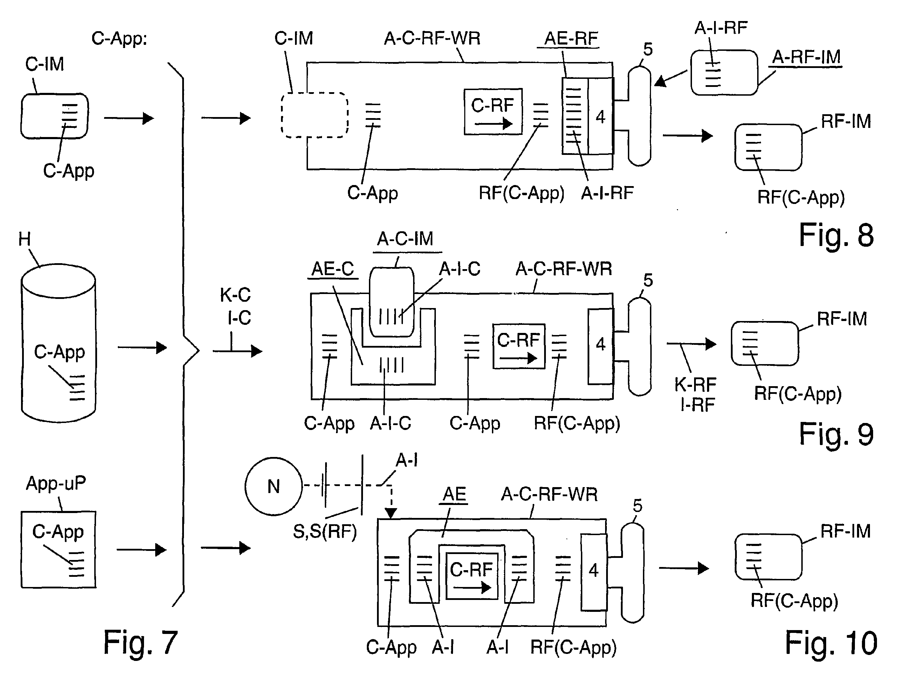

- Fig. 7: Varianten der Herkunft von Kontakt-Applikationen zum Einschreiben in berührungslose Identifikationsmedien,
- Fig. 8: eine Autorisierungs-Schreib/Lesestation zum Einschreiben von Kontakt-Applikationen mittels einem berührungslosen Autorisierungsmedium,
- Fig. 9: eine Autorisierungs-Schreib/Lesestation zum Einschreiben von Kontakt-Applikationen mittels einem Kontakt-Autorisierungsmedium,
- Fig. 10: eine Autorisierungs-Schreib/Lesestation zum Einschreiben von Kontakt-Applikationen mittels einem eingebauten Autorisierungselement,

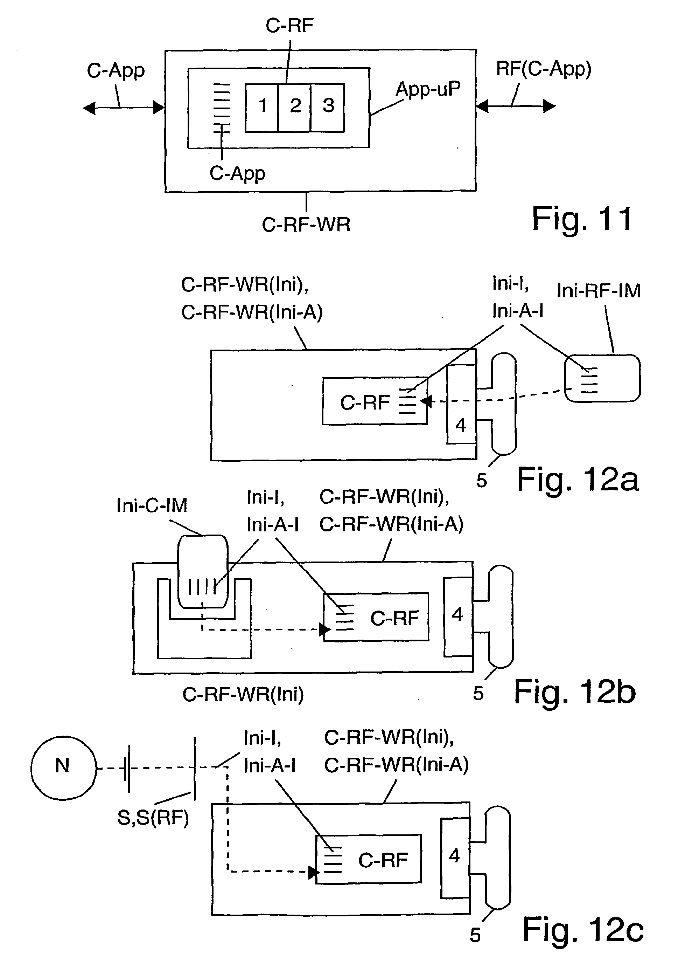

- Fig. 11: ein Konvertermodul, welches in einen Applikationsrechner integriert ist,
- Fig. 12a-c: verschiedene Möglichkeiten zur Initialisierung von Konvertermodulen bzw. von Schreib/Lesestationen mit Konvertermodul,

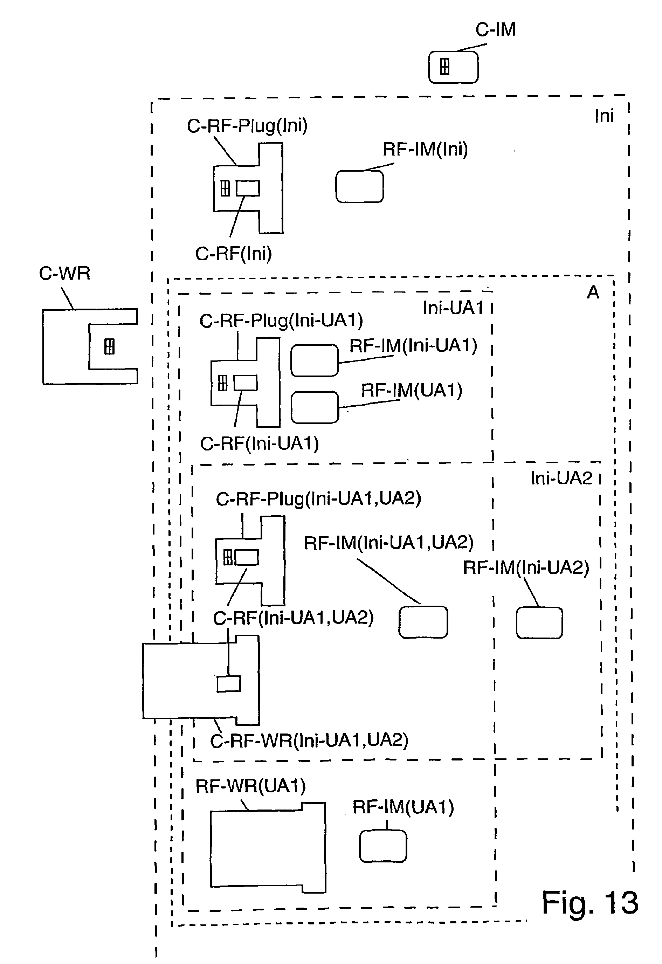

- Fig. 13: Initialisierungen von berührungslosen Identifikationsmedien, Konvertermodulen, Einsteckmodulen und Schreib/Lesestationen allgemein, sowie im Rahmen von Autorisierungs- und Unter-Autorisierungssystemen,

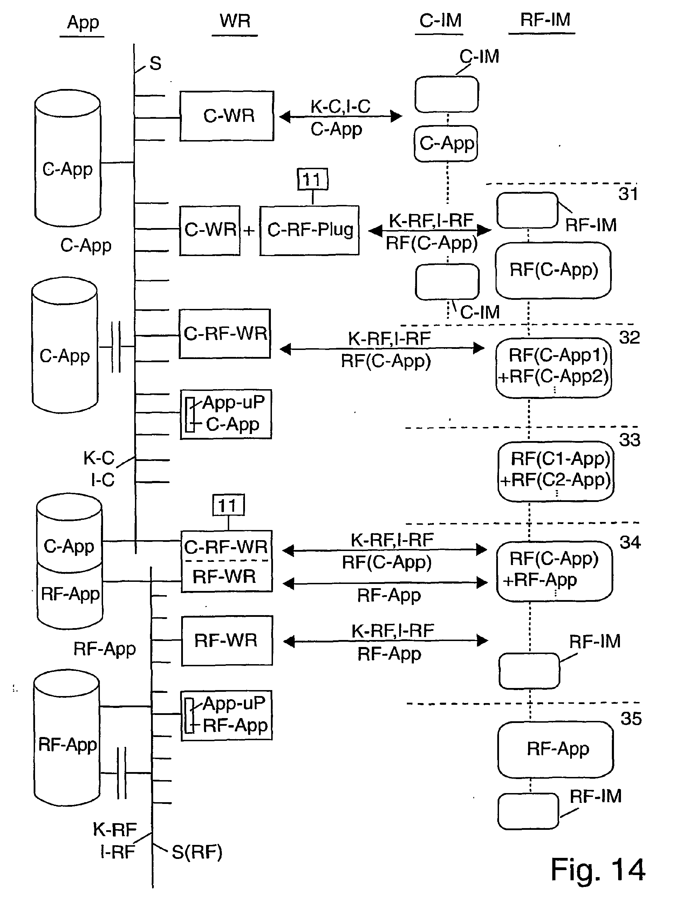

- Fig. 14: eine Anlage mit Kontakt-Applikationen, Kontaktkarten-Kommunikation, Kontaktmedien, Konvertermodulen und berührungslosen Identifikationsmedien sowie mit zusätzlichen berührungslosen Applikationen, berührungsloser Kommunikation und berührungslosen Lesestationen.

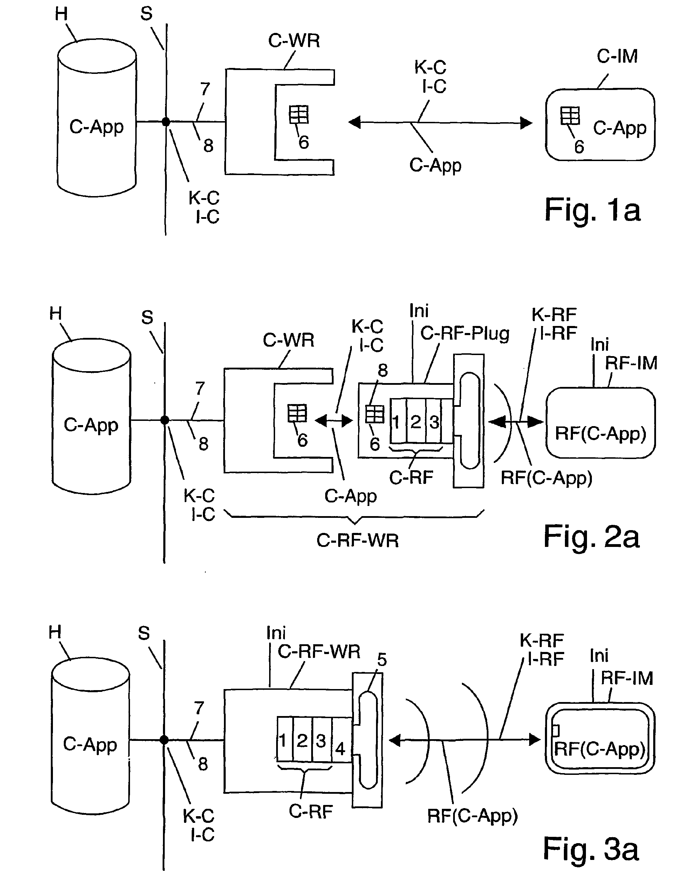

Die Fig. 1a- 3a illustrieren das erfindungsgemässe Verfahren zum Betrieb von initialisierten berührungslosen Identifikationsmedien RF-IM in einem Kontaktkartensystem mittels eines initialisierten Konvertermoduls C-RF zur Übersetzung der berührungslosen Kommunikation K-RF mit dem Identifikationsmedium in die Kontakt-Kommunikation K-C des Kontaktkarten-Systems.

Fig. 1a zeigt ein Kontaktkarten-System bekannter Art mit Kontaktkarten-Schreib/- Lesestationen C-WR und zugeordneten Kontakt-Identifikationsmedien C-IM als Applikationsmedien, welche beide Kontakte 6 aufweisen sowie mit einer Kontaktkarten-Schnittstelle S und einer Verbindung zu einem Hostcomputer H, welcher Kontakt-Applikationen C-App enthält. Vom Kontaktmedium C-IM über die Lesestation C-WR bis zum Host H bzw. zu einer Applikation in einem Applikationsrechner App-uP (Fig. 1b) erfolgt die Kommunikation als Kontakt-Kommunikation K-C mit Kontakt-Informationen I-C.

Um in solchen bestehenden Kontakt-Systemen mit Kontaktkarten C-IM zusätzlich und alternativ auch berührungslose Identifikationsmedien RF-IM als Applikationsmedien mit all ihren bekannten Vorteilen und erweiterten Anwendungsmöglichkeiten einsetzen zu können, wird erfindungsgemäss (nach Fig. 2a, 3a) ein initialisiertes Konvertermodul C-RF zwischengeschaltet, welches einerseits eine RF-Kommunikation K-RF mit initialisierten berührungslosen Identifikationsmedien RF-IM und andererseits eine Konktakt-Kommunikation K-C an einer Kontaktkarten-Schnittstelle S zu einem Hostcomputer H oder zu einem Applikationsrechner App-uP einer Kontakt-Schreib/Lesestation C-WR ausführt zur Kommunikation mit einer Kontakt-Applikation C-App des Systems

und welches die berührungslose Kommunikation K-RF bezüglich Kommunikationsregeln und Informationen I-RF in eine Kontakt-Kommunikation K-C mit Kontakt-Informationen I-C übersetzt und umgekehrt.

Damit wird das Kontaktkarten Betriebssystem im Prinzip (mindestens teilweise) in das Konvertermodul integriert.

Eine Ausführungsvariante dazu zeigt Fig. 2a, wobei hier das Konvertermodul C-RF als initialisiertes (Ini) Einsteckmodul C-RF-Plug mit Kontakten 6 ausgebildet ist. Dieses Einsteckmodul ist in eine bestehende Kontakt-Schreib/Lesestation einsteckbar und ist gleichzeitig als berührungslose Schreib/Lesestation zur Kommunikation mit initialisierten (Ini) berührungslosen Identifikationsmedien RF-IM ausgebildet. Der Kontakt erfolgt über die Kontakte 6 der Kontaktlesestation C-WR und des Einsteckmoduls C-RF-Plug. Im eingesteckten Zustand bilden das Einsteckmodul und die Kontaktlesestation zusammen eine initialisierte berührungslose Schreib/Lesestation C-RF-WR. Damit wird zur Ausführung einer Kontakt-Applikation C-App die entsprechende Kontakt-Kommunikation K-C und -Information I-C vom Konvertermodul C-RF in die berührungslose RF-Sprache übersetzt: C-App in RF(C-App) und als berührungslose Kommunikation K-RF, I-RF an die berührungslosen Identifikationsmedien RF-IM übermittelt.

Bei der probeweisen oder schrittweisen Einführung von zusätzlichen berührungslosen Identifikationsmedien RF-IM können bestehende Kontaktkarten-Schreib/ Lesestationen C-WR mit Einsteckmodulen C-RF-Plug beliebig sowohl für Kontaktkarten C-IM als auch für berührungslose Medien RF-IM verwendet werden. Beispielsweise in einem Einkaufszentrum mit mehreren Registrierkassen, welche mit Kontaktkarten-Lesestationen C-WR ausgerüstet sind, können zur schrittweisen Einführung von berührungslosen Identifikationsmedien einzelne Kassen mittels der Einsteckmodule C-RF-Plug beliebig umgerüstet werden, d.h. je mehr Käufer mit berührungslosen Identifikationsmedien bezahlen wollen, desto mehr entsprechend umgerüstete berührungslose Schreib/Lesestationen können so auf einfache Art zur Verfügung gestellt werden.

Das initialisierte Einsteckmodul C-RF-Plug kann auch zweiteilig ausgeführt werden mit einem 1. Teil, welcher vollständig in eine Kontaktkarten-Schreib/Lesestation C-WR eingeführt wird, und einem 2. Teil, welcher an der Aussenseite der Lesestation C-WR angebracht wird und welcher die Kommunikation K-RF mit den berührungslosen Identifikationsmedien RF-IM durchführt.

Die Fig. 3a zeigt als weitere Variante ein Konvertermodul C-RF, welches mit Anschlüssen 7 direkt an die Schnittstelle S mit Kontaktkommunikation K-C, I-C angeschlossen ist und welches mit einem integrierten RF-Sender/Empfänger eine initialisierte (Ini) berührungslose Schreib/Lesestation C-RF-WR bildet. Der Aufbau des Konvertermoduls C-RF und der berührungslosen Schreib/Lesestation C-RF-WR wird zu Fig. 5 weiter erläutert.

Die Initialisierung Ini zur Herstellung der Kompatibilität von Kontaktsystem C und berührungslosem System RF muss an den Identifikationsmedien RF-IM und an den RF Lesestationen erfolgen, d.h. am Konvertermodul C-RF selber oder an den damit gebildeten Schreib/Lesestationen C-RF-WR oder an den Einsteckmodulen C-RF-Plug. Diese Initialisierung wird zu den Fig. 12 und 13 weiter erläutert.

Die Fig. 1b - 3b zeigen analoge Beispiele zu den Fig. 1a - 3a, wobei hier jedoch dem Konvertermodul C-RF ein Applikationsrechner App-uP zugeordnet ist zur Ausführung einer Applikation C-App unabhängig von einer direkten Online-Verbindung zu einem Host H und zur Ausführung von dezentralen lokalen Funktionen einer Applikation C-App
- an einer Station mit initialisiertem Einsteckmodul C-RF-Plug gemäss Fig. 2b
- oder an einer initialisierten berührungslosen Schreib/Lesestation C-RF-WR gemäss Fig. 3b.

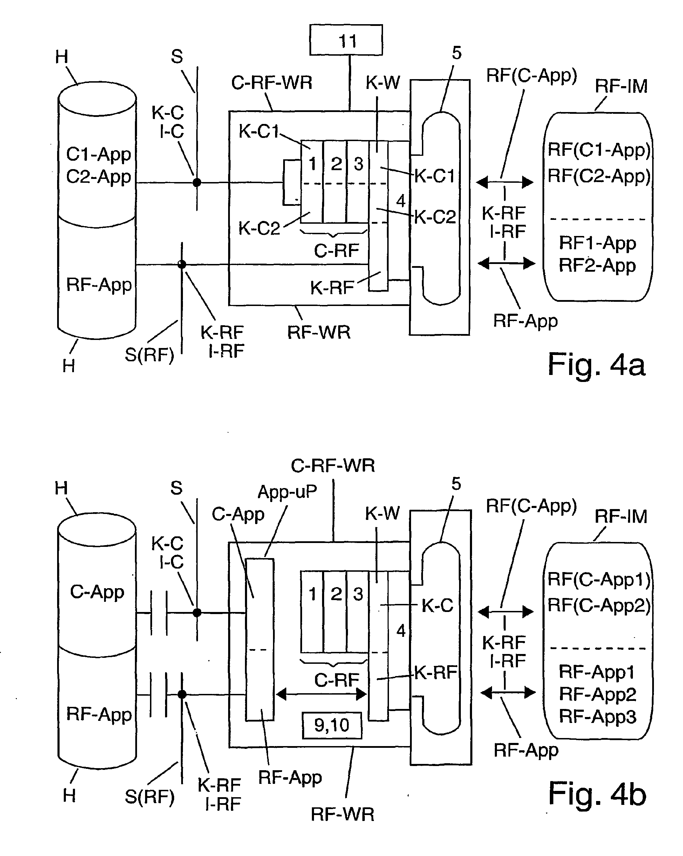

Fig. 4a zeigt ein Konvertermodul C-RF in einer berührungslosen Schreib/Lesestation C-RF-WR, welche zusätzliche Mittel aufweist zur berührungslosen Kommunikation K-RF, I-RF mit berührungslosen Applikationen RF-App an einer Schnittstelle S(RF), z.B. zu einem Host H mit berührungslosen Applikationen RF-App. Nach Bedarf kann das Konvertermodul C-RF auch mehrere Arten von Kontakt-Kommunikationen (mit verschiedenen Kontakt-Betriebssystemen) verarbeiten, hier z.B. zwei Arten von Kontakt-Kommunikationen K-C1 und K-C2. Dazu weist das Konvertermodul C-RF hier auch ein Mittel KW zur Wahl der Kommunikationsart zwischen verschiedenen Kontakt-Kommunikation K-C1, K-C2 und berührungsloser Kommunikation K-RF auf. Mit dem Wahlmittel KW wird sichergestellt, dass die richtige benötigte Kommunikationsart in beiden Richtungen, d.h. vom Host zum Identifikationsmedium RF-IM wie auch vom Identifikationsmedium zum Host bzw. zur Applikation gewählt, übersetzt und weitergeleitet wird. Auch verschiedene Arten von RF-Kommunikationen K-RF1, K-RF2 sind möglich.

Dabei kann die Kommunikationswahl entsprechend der Art der Applikation (C1-App, C2-App, RF1-App, RF2-App) automatisch erfolgen oder sie kann auch einstellbar sein.

Die Kommunikationswahl kann entsprechend einer Anfrage seitens des Hosts H oder des Applikationsrechners App-uP erfolgen und sie kann andererseits auch entsprechend einer Anfrage seitens des Identifikationsmediums RF-IM erfolgen.

Verschiedene Betriebssysteme K-C1, K-C2 können z.B. von verschiedenen Anbietern von Geld- und Kreditkarten eingesetzt werden (von Bank1, Bank2, Post) oder auch von Firmen für firmeneigene Applikationen (Zutritt, IT-Zugang, Kantine etc.).

Das Beispiel von Fig. 4a zeigt die drei Kommunikationsarten K-C1, K-C2, K-RF mit entsprechenden Applikationen C1-App, C2-App und RF-App in einem Host H. Das Wahlmittel KW stellt hier sicher, dass die Kontakt-Applikationen C1-App, C2-App mit den Kontakt-Kommunikationsarten K-C1, K-C2 in die RF-Sprache übersetzt und in RF-Kommunikation als RF(C1-App) bzw. RF(C2-App) an das berührungslose Identifikationsmedium RF-IM gesendet werden und umgekehrt. Eine berührungslose Applikation RF-App mit berührungsloser Kommunikation K-RF und I-RF an einer Schnittstelle S(RF) zu einem Host benötigt demgegenüber keine Übersetzung. Dann wird durch das Kommunikationswahlmittel KW zur Ausübung einer RF-Applikation die berührungslose Kommunikation K-RF, I-RF in beiden Richtungen direkt weitergeleitet.

Mit Vorteil verwenden Kontakt-Systeme standardisierte Kommunikationsarten. Dabei wird das Konvertermodul C-RF von einer Kontakt-Applikation C-App aus einem zugeordneten Host H oder einem Applikationsrechner App-uP gemäss den Regeln und Protokollen einer standardisierten Kontakt-Kommunikation K-C mit standardisierten Kontakt-Informationen I-C angesteuert und das Konvertermodul C-RF antwortet an die Kontakt-Applikation C-App gemäss den selben Regeln und Protokollen.

Das Konvertermodul C-RF kann nach Standardisierungsprotokollen gemäss nationalen oder internationalen Organisationen wie ISO, IEC, IEEE, ANSI, CEN oder CENELEC angesteuert werden und antworten.

Fig. 4b zeigt ein Beispiel mit einem Applikationsrechner App-uP in der berührungslosen Schreib/Lesestation C-RF-WR mit temporärer Verbindung zu einem Host H, wobei die Applikationen des Applikationsrechners App-uP dezentral, d.h. unabhängig vom Host H, ausführbar sind. Dieses Beispiel weist eine Art von Kontaktkommunikation K-C mit mehreren Applikationen C-App1, C-App2 und eine Art von RF-Kommunikation K-RF mit mehreren Applikationen RF-App1, RF-App2, RF-App3 auf. Das Wahlmittel KW unterscheidet hier also die Kommunikationsarten K-C und K-RF.

Die Fig. 5a und 5b illustrieren den Aufbau eines erfindungsgemässen Konvertermoduls C-RF. Das Konvertermodul weist drei Teile auf:
- einerseits einen Teil 1, welcher eine Kontaktkommunikation K-C, I-C an eine Kontaktkarten-Schnittstelle S zu einem Hostcomputer H oder zu einem Applikationsrechner App-uP einer Kontakt-Schreib/Lesestation C-WR ausführt,
- andererseits einen Teil 3, welcher die berührungslose Kommunikation K-RF, I-RF zu den berührungslosen Identifikationsmedien RF-IM ausführt,
- und einen Teil 2 als Übersetzerteil C/RF aufweist, welcher die berührungslose Kommunikation K-RF, I-RF in die Kontakt-Kommunikation K-C, I-C übersetzt. Zur Ausführung der berührungslosen Kommunikation K-RF mit den berührungslosen Identifikationsmedien RF-IM enthält das Konvertermodul C-RF auch einen RF-Sender/Empfänger 4 mit einer Antenne 5.

Das Beispiel von Fig. 5a zeigt ein Konvertermodul C-RF in einem Einsteckmodul C-RF-Plug mit Kontakten 6, angepasst an eine gewünschte Kontakt-Schreib/Lesestation C-WR.

Das Beispiel von Fig. 5b zeigt ein Konverterinodul C-RF in einer berührungslosen Schreib/Lesestation C-RF-WR mit einem integrierten Applikationsrechner App-uP sowie beispielsweise mit zwei Arten von Kontaktkommunikation K-C1, K-C2 sowie mit einer RF-Kommunikation K-RF für entsprechende Applikationen.

Das Konvertermodul C-RF mit den Teilen 1 = C Kommunikationsteil, 2 = C/RF Übersetzerteil und 3 = RF Kommunikationsteil muss nicht als ein funktionelles Bauteil ausgeführt sein. Diese Teile 1, 2, 3 können auch als separate Bauteile, allenfalls bestehend aus mehreren Unterbauteilen, ausgebildet sein. Beispielsweise können der Teil 3 oder auch die Teile 3 und 4 ein Bauteil bilden. Dabei kann der Teil 3 auch Initialisierungs-Informationen Ini-I, Ini-A-I verarbeiten bzw. enthalten und damit die Einhaltung der Initialisierungsvorgaben und der Regeln des Autorisierungssystems A sicherstellen (vergleiche Fig. 12 und 13).

Fig. 6 zeigt ein zugeordnetes berührungsloses Identifikationsmedium RF-IM, welches in seinem Speicher mehrere unabhängige Applikationen enthält. Hier beispielsweise zwei Arten von Kontaktkommunikationen K-C1, K-C2 mit Kontakt-Applikationen in RF-Sprache RF(C1-Appl), RF(C1-App2) und RF(C2-Appl) sowie die berührungslosen Applikationen: RF-App1, RF-App2, RF-App3 in RF-Kommunikation K-RF.

Zur Absicherung der berührungslosen Kommunikation K-RF mit den übermittelten Informationen I-RF zwischen dem Konvertermodul C-RF und den berührungslosen Identifikationsmedien RF-IM wird vorzugsweise eine Verschlüsselung cryp der Kommunikation K-RF vorgenommen.

Für Schreibvorgänge bei der berührungslosen Kommunikation K-RF vom Konvertermodul C-RF zu den berührungslosen Identifikationsmedien RF-IM wird vorzugsweise ein Schattenspeicher shad in den Identifikationsmedien und am Konvertermodul eingesetzt - wie dies in den Fig. 5 und 6 gezeigt ist.

Die Verschlüsselung cryp dient zur Absicherung gegen unbefugtes Abhören und unbefugte Eingriffe von Dritten. Mit dem Schattenspeicher shad wird sichergestellt, dass ein Schreibvorgang vollständig und richtig (oder gar nicht) ausgeführt wird und dass z.B. bei einem Unterbruch der Kommunikation kein Datenverlust oder Fehler entstehen. Diese Methoden sind z.B. in der WO 97/34265 beschrieben.

Die Fig. 4a und 5a zeigen berührungslose Schreib/Lesestationen mit einem Energiespeicher 9 und einem Leistungsverstärker 10, welche dem Konvertermodul C-RF zugeordnet sind. Dies ermöglicht höhere Sendeleistungen und auch den dezentralen autonomen Betrieb von berührungslosen Schreib/Lese-Stationen. In Fig. 5a erfolgt die Energieversorgung 8 des Einsteckmoduls C-RF-Plug vorzugsweise über die Kontakte 6 zur Kontaktkarten-Lesestation C-WR. Dabei kann oft nur eine relativ geringe Leistung bezogen werden. Für die Kommunikation mit den berührungslosen Identifikationsmedien RF-IM und die Ausübung einer Applikation kann jedoch eine höhere Leistung benötigt oder erwünscht sein. Dazu ist der Energiespeicher 9 vorgesehen, welcher während der Sendepausen laufend Energie sammelt. Mit einem Leistungsverstärker 10 kann die gewünschte höhere Sendeleistung für die berührungslose Kommunikation und die Ausübung von Applikationen erzeugt werden.

Das Konvertermodul bzw. die Schreib/Lesestation kann aber auch Mittel zur autonomen Energieversorgung wie Batterien oder Solarzellen enthalten. Damit kann z.B. eine dezentrale Station, welche einen Applikationsrechner App-uP mit einer Applikation enthält, wie z.B. in Fig. 4b, auch offline betrieben werden. Dabei können lokale Funktionen im Applikationsrechner und Grundfunktionen im Host enthalten sein.

Zur Ausübung von Applikationen können den Konvertermodulen C-RF bzw. den berührungslosen Schreib/Lesestationen, wie in Fig. 4a und 5a gezeigt ist, auch entsprechende Dialoggeräte 11 zugeordnet werden, z.B. ein Display 12, eine Eingabetastatur 13, biometrische Sensoren und ErKennungselemente 14 und auch PIN-Codes 15 für Zugangsberechtigungen. Das Beispiel von Fig. 5a zeigt ein Einsteckmodul C-RF-Plug mit Dialoggeräten 11. Diese Dialoggeräte und die zugeordneten Applikationen können auch über die Funktionen der Kontaktkarten-Schreib/Lesestationen C-WR, in welche dieses Einsteckmodul eingesteckt ist, hinausgehen, d.h. es sind auch neue und erweiterte Funktionen bzw. Dialoggeräte möglich.

Mit den Fig. 7-10 wird das Einschreiben bzw. Initialisieren von neuen, geänderten oder erweiterten Kontakt-Applikationen C-App in berührungslose Identifikationsmedien RF-IM illustriert. Zu diesem Einschreiben wird eine Autorisierungs-Schreib/- Lesestation A-C-RF-WR (bzw. eine Initialisierungs-Schreib/Lesestation) mit einem Konvertermodul, einem Autorisierungselement AE sowie mit Autorisierungs-Informationen A-I eingesetzt. Die Regeln zum Einschreiben bzw. Initialisieren neuer Applikationen und neuer Identifikationsmedien sind in einem Autorisierungssystem festgelegt (zu Fig. 13, 14 beschrieben). Die Fig. 7 illustriert die mögliche Herkunft solcher neuer Applikationen zum Einschreiben in die berührungslosen Identifikationsmedien RF-IM. Diese neuen Applikationen C-App können z.B. in einem Kontaktidentifikationsmedium C-IM, in einem Host H oder auch in einem Applikationsrechner App-uP gespeichert sein.

Die Fig. 8-10 zeigen mögliche Ausführungsvarianten zum Einschreiben bzw. Initialisieren neuer Applikationen. Gemäss Beispiel von Fig. 8 sind die Autorisierungsinformationen A-I in einem mobilen berührungslosen Autorisierungsmedium A-RF-IM enthalten und werden von diesem in ein Autorisierungselement AE-RF der Autorisierungs-Schreib/Lesestation A-C-RF-WR übertragen. Mittels dieser Autorisierungsinformationen A-I und dem Autorisierungselement AE wird anschliessend eine neue Kontaktapplikation C-App im Konvertermodul C-RF in die berührungslose Kommunikation K-RF, I-RF übersetzt und als übersetzte Kontakt-Applikation RF(C-App) in das berührungslose Identifikationsmedium RF-IM eingeschrieben.

Fig. 9 zeigt ein Beispiel, bei dem die Autorisierungs-Informationen A-I mittels eines mobilen Kontakt-Autorisierungsmediums A-C-IM in ein Autorisierungselement AE-C der Autorisierungs-Schreib/Lesestation A-C-RF-WR übertragen werden.

Fig. 10 zeigt eine weitere Variante, bei der ein Autorisierungselement AE, welches die Autorisierungs-Informationen A-I enthält, in die Autorisierungs-Schreib/Lesestation A-C-RF-WR eingebaut bzw. integriert ist. Fig. 10 zeigt noch eine weitere Variante, bei welcher die Autorisierungs-Informationen A-I über ein Netzwerk N an die Autorisierungs-Schreib/Lesestation A-C-RF-WR übertragen werden. Dies kann z.B. über ein gesichertes privates oder mit entsprechender Verschlüsselung auch über ein öffentliches Netzwerk N übertragen werden.

Wie diese verschiedenen Möglichkeiten zeigen, kann je nach Bedarf und Anwendung eine besonders geeignete Variante zur Initialisierung bzw. zum Einschreiben neuer Applikationen gewählt werden. Es sind natürlich auch Kombinationen davon denkbar, z.B. dass ein Teil der Autorisierungs-Informationen A-I über ein Netzwerk N von einer Zentrale aus eingespeist wird, während der Rest Autorisierungs-Informationen z.B. lokal mit einem Autorisierungsmedium eingespeist wird.

Fig. 11 zeigt als weitere besonders rationelle Ausführung der Erfindung eine berührungslose Schreib/Lesestation C-RF-WR mit einem Applikationsrechner, wobei hier das Konvertermodul C-RF in den Applikationsrechner App-uP integriert ist, dies anstelle von zwei notwendigen separaten Rechnerchips. Dies ermöglicht eine besonders kostengünstige, rationelle und platzsparende Herstellung. Dabei kann der Applikationsrechner auch Applikationen C-App enthalten.

Zu Fig. 12: Mit der Initialisierung von berührungslosen Identifikationsmedien RF-IM und der Lesestationen C-RF-WR und C-RF-Plug wird die Kompatibilität vom Kontaktsystem C und berührungslosem System RF hergestellt.

Die Fig. 12a, b, c zeigen verschiedene Möglichkeiten zur Initialisierung von Lesestationen C-RF-WR und Einsteckmodulen C-RF-Plug bzw. von Konvertermodulen C-RF. Dabei kann die Initialisierung im Konvertermodul C-RF selber oder in der ganzen Lesestation C-RF-WR, C-RF-Plug enthalten sein. Gemäss Fig. 12a kann diese Initialisierung Ini durch ein berührungsloses Initialisierungs-Identifikationsmedium Ini-RF-IM erfolgen, von welchem die Initialisierungs-Informationen Ini-I in die Lesestation C-RF-WR eingeschrieben werden. Mit allgemeinen Initialisierungs-Informationen Ini-I, die nicht im Rahmen eines Autorisierungssystems A festgelegt sind, wird die Schreib/Lesestation zur initialisierten Schreib/Lesestation C-RF-WR(Ini). Mit Initialisierungen, welche im Rahmen eines hierarchischen Autorisierungssystems A festgelegt und verwaltet sind, wird die Schreib/Lesestation durch entsprechende Initialisierungs-Informationen Ini-A-I zu einer initialisierten Schreib/Lesestation C-RF-WR(Ini-A).

Nach Fig. 12b erfolgt die Initialisierung durch ein Initialisierungs-Kontaktmedium Ini-C-IM.

Gemäss Fig. 12c kann die Initialisierung der Schreib/Lesestationen C-RF-WR auch über ein Netzwerk N erfolgen, über welches die Initialisierungs-Informationen Ini-I bzw. Ini-A-I in die Schreib/Lesestationen C-RF-WR übermittelt werden.

Fig. 13 illustriert die Initialisierung von berührungslosen Identifikationsmedien RF-IM sowie von den Lesestationen, d.h von Konvertermodulen C-RF bzw. Einsteckmodulen C-RF-Plug und Schreib/Lesestationen C-RF-WR. Diese Initialisierungen Ini können allgemeine System-Initialisierungen darstellen oder im Rahmen eines hierarchischen Autorisierungssystems A (siehe Fig. 12a-c) und weiter auch im Rahmen von Unter-Autorisierungssystemen UA erfolgen.

In diesem Beispiel sind zwei Unter-Autorisierungssysteme UA1 und UA2 im Rahmen des Autorisierungssystems A dargestellt.

Die Fig. 13 zeigt in der Reihenfolge von oben nach unten:
- Eine allgemeine Initialisierung Ini (welche nicht im Rahmen des Autorisierungssystems A erfolgt) eines Einsteckmoduls C-RF-Plug(Ini) zur Kommunikation mit berührungslosen Identifikationsmedien RF-IM(Ini). Eine solche allgemeine Initialisierung kann z.B. durch Unikats-Produktionsnummern der Identifikationsmedien RF-IM und der Lesestationen C-RF-WR und C-RF-Plug erfolgen.
- Eine Initialisierung Ini-UA1 eines Einsteckmoduls C-RF-Plug(Ini-UA1) bzw. des Konvertermoduls C-RF(Ini-UA1) im Rahmen des Autorisierungssystems A und des Unter-Autorisierungssystems UA1 zur Kommunikation mit Identifikationsmedien RF-IM(Ini-UA1) und auch mit Identifikationsmedien RF-IM(UA1), welche bereits vor der Erweiterung des Kontaktsystems C in einem berührungslosen System RF im Rahmen des Unter-Autorisierungssystems UA1 verwendet werden und damit schon implizit initialisiert sind.
- Eine zusätzliche Initialisierung Ini-UA2 im Rahmen eines zweiten Unter-Autorisierungssystems UA2, wobei hier ein Einsteckmodul C-RF-Plug(Ini-UA1, UA2) und eine Schreib/Lesestation C-RF-WR(Ini-UA1, UA2) im Rahmen beider Unter-Autorisierungssysteme UA1 und UA2 initialisiert werden. Das Beispiel zeigt dazu ein Identifikationsmedium RF-IM(Ini-UA1, UA2), das im Rahmen von UA1 und UA2 initialisiert ist sowie ein Identifikationsmedium RF-IM(Ini-UA2), welches nur im Rahmen des Unter-Autorisierungssystems UA2 initialisiert ist.
- Und zu unterst eine reine berührungslose Schreib/Lesestation RF-WR(UA1) und ein entsprechendes Identifikationsmedium RF-IM(UA1), welche im berührungslosen System RF, jedoch nicht mit dem Kontaktsystem C kommunizieren.

### Anwendungsbeispiel:

Zwei unabhängige Anwender wollen ein bestehendes Kontaktsystem mit zusätzlichen berührungslosen Identifikationsmedien RF-IM, entsprechenden Applikationen und mit Einsteckmodulen C-RF-Plug ausrüsten. Diesen unabhängigen Anwendern ist je ein Unter-Autorisierungssystem UA1, UA2 zugewiesen, in denen sie ihre entsprechenden unabhängigen Applikationen App1 in UA1 und App2 in UA2 gestalten können.

Sie haben zwei neue Kundenbonus-Applikationen App1 in UA1 und App2 in UA2 eingeführt. Zusätzlich sei festgelegt, dass der Rabatt bei der Applikation App 2 grösser ist, wenn ein Kunde auch an der Applikation App1 teilnimmt, jedoch nicht umgekehrt. Kunden, die nur an der App1 teilnehmen, benötigen daher keine Karten mit App2, d.h. Identifikationsmedien RF-IM(App1/UA1) genügen. Entsprechend könnten alle Geschäfte mit Einsteckmodulen C-RF-Plug(UA1, UA2) ausgerüstet werden, welche im Rahmen beider Unter-Autorisierungssysteme initialisiert sind oder es können die Geschäfte auch je nach Bedarf mit Einsteckmodulen ausgerüstet werden, welche nur im Rahmen eines Unter-Autorisierungssystems UA initialisiert sind. Die Initialisierung im Rahmen nur eines Unter-Autorisierungssystems bildet eine zusätzliche Sicherheitsmassnahme zur Wahrung der Unabhängigkeit der Applikationen. Dies würde auch erlauben, alle Kunden mit Identifikationsmedien RF-IM(Appl/UA1, App2/UA2) auszurüsten, welche im Rahmen beider Unter-Autorisierungssysteme initialisiert sind, denn es ist billiger, die Lesestationen C-RF-Plug umzurüsten als eine Vielzahl von Identifikationsmedien RF-IM.

Mit der schematisch dargestellten Anlage nach Fig. 14 wird die universelle Anwendbarkeit des erfindungsgemässen Verfahrens und mit den Konvertermodulen C-RF in den berührungslosen Schreib/Lesestationen weiter illustriert. Diese Anlage besteht aus Hostcomputem H, mit Applikationen App, mit Schreib/Lesestationen WR sowie mit Identifikationsmedien IM. Die Fig. 14 illustriert (von oben nach unten dargestellt) die mögliche stufenweise Einführung von initialisierten berührungslosen Identifikationsmedien RF-IM mit zugeordneten initialisierten berührungslosen Schreib/Lesestationen C-RF-WR bzw. C-RF-Plug und den Ausbau bzw. die Erweiterung von Applikationen bis zu einer möglichen teilweisen oder vollständigen Transformation des ursprünglichen Kontaktkarten-Systems mit Kontaktkommunikation K-C in ein berührungsloses System mit berührungslosen Identifikationsmedien RF-IM und berührungsloser Kommunikation K-RF, I-RF. Diese Anlage zeigt in möglichen Ausbaustufen von oben nach unten Hostcomputer H mit Kontaktapplikationen C-App, eine Kontaktschnittstelle S mit Kontaktkommunikation K-C, I-C, ergänzt durch Kontaktapplikationen C-App in Applikationsrechnern App-uP der Schreib/Lesestationen WR. Diese können ergänzt werden durch Hostcomputer mit berührungslosen Applikationen RF-App und einer berührungslosen Schnittstelle S(RF) mit berührungsloser Kommunikation K-RF, I-RF.

Bezüglich der zugeordneten Schreib/Lesestationen WR wird zuerst ausgegangen von einem reinen Kontaktkarten-System mit Kontaktkarten-Schreib/Lesestationen C-WR (z.B. gemäss Fig. 1a, 1b). Dieses wird ergänzt
- durch in die bestehenden Kontaktkarten-Lesestationen einsteckbare initialisierte Einsteckmodule C-RF-Plug (z.B. gemäss Fig. 2a, 2b)
- sowie durch initialisierte berührungslose Schreib/Lesestationen C-RF-WR (gemäss Fig. 3a, 3b),
- durch kombinierte Stationen C-RF-WR und RF-WR (gemäss Fig. 4b, 5b)
- und schliesslich durch reine berührungslose Schreib/Lesestationen RF-WR (ohne notwendiges Konvertermodul C-RF).

Bezüglich der Identifikationsmedien sind mögliche Ausbaustufen 31-35 dargestellt: Die bestehende Anlage weist nur Kontakt-Identifikationsmedien C-IM auf.

Mit der Stufe 31 werden erfindungsgemäss zusätzliche initialisierte berührungslose Identifikationsmedien RF-IM mit einer Kontaktapplikation in RF-Sprache RF(C-App) eingeführt. In der Stufe 32 werden RF-IM Medien eingeführt, welche mehrere Kontakt-Applikationen RF(C-App1), RF(C-App2) enthalten.

In der Stufe 33 werden RF-IM Medien eingeführt, welche mehr als eine Art von Kontakt-Applikationen mit verschiedenen Arten von Kontakt-Kommunikationen K-C1, K-C2, (z.B. von verschiedenen unabhängigen Betreibern) enthalten: RF(C1-App), RF(C2-App).

In der Stufe 34 werden RF-IM Medien eingeführt, welche zusätzlich zu den Kontakt-Applikationen RF(C-App) auch reine berührungslose Applikationen RF-App enthalten.

In der Stufe 35 schliesslich werden berührungslose Identifikationsmedien RF-IM eingeführt, welche nur noch berührungslose Applikationen RF-App enthalten.

Diese beschriebenen Ausbaustufen 31-35 können im Prinzip an jedem berührungslosen Identifikationsmedium RF-IM ausgeführt werden, indem neue Applikationen eingeführt und alte Applikationen gelöscht werden, d.h. die berührungslosen Identifikationsmedien müssen nicht ersetzt werden.

Parallel zu diesem Ausbau bezüglich der berührungslosen Identifikationsmedien RF-IM und der darin enthaltenen Applikationen (dies auch bezüglich der Anzahl eingesetzter Medien) können natürlich auch die zugeordneten Schreib/Lesestationen ausgebaut und allfällig schrittweise auch ersetzt werden.

Dies ergibt eine schrittweise Überführung eines Systems mit Kontaktkarten-Applikationen in ein berührungsloses System - ohne dass eine Umschreibung der Regeln und Protokolle einer Kontakt-Kommunikation im System auf der Ebene des Hosts auf Regeln und Protokolle einer berührungslosen Kommunikation ausgeführt werden muss.

Das neue erfindungsgemässe Verfahren zur Einführung von berührungslosen Identifikationsmedien RF-IM weist wesentliche Vorteile auf:
- das bestehende Kontaktsystem kann weiter verwendet werden,
- es sind nur kleine Investitionsschritte erforderlich mit entsprechend geringen Kosten; - Fehler bei der Einführung und das Risiko von Ausfällen wird stark reduziert,
- die Ausbauschritte z.B. mit Einsteckmodulen C-RF-Plug können provisorisch eingerichtet, getestet und auch wieder ausgewechselt und geändert werden,
- je nach Wunsch und Bedarf sind fast beliebige Ausbau- und Anpassungsschritte auch bezüglich der Applikationen möglich.

Ein wichtiger Vorteil liegt vor allem auch darin, dass die berührungslosen Identifikationsmedien RF-IM mehrere, im Speziellen auch mehrere unabhängige Applikationen enthalten können, wobei dies auch verschiedene Arten von Kontaktkommunikation und berührungsloser Kommunikation (K-C1, K-C2 und K-RF1, K-RF2) umfasst. Für einen Benutzer ist es wichtig, dass er mit einem solchen Identifikationsmedium mehrere Applikationen im Prinzip beliebiger Zusammenstellung für seine gewünschten Einsatzgebiete abdecken kann.

Solche Applikationen, welche an entsprechenden berührungslosen Schreib/- Lesestationen C-RF-WR mit passenden Dialoggeräten 11 ausgeübt werden, sind beispielsweise örtliche und zeitliche Zutrittskontrolle, Zugang zu Geräten der Informations- und Kommunikationstechnik (Computer, Bildtelefone) und zu IT-Anwendungen (Datenbanken, Netzwerke, Verschlüsselungstechniken) wie auch Kredit- und Wertkarten-Applikationen.

Beispiele für die praktische Anwendung von berührungslose Identifikationsmedien können sein: örtlicher Zutritt zu gesicherten Räumen und zu Computer-Arbeitsplätzen (Personal IT Access), Zugang auf Netzwerke und gesicherte Datenbanken, Zutritt zu Registrierkassen in Einkaufszentren für den Kassierer, Bezug von Leistungen und Waren z.B. an Tankstellen und Verpflegungsautomaten, Mehrfachzutrittskarten zu Sport- und Freizeitanlagen, Parkhäusern und für öffentliche Verkehrsmittel usw.

Vorzugsweise wird ein passendes Autorisierungssystem für eine Anlage bzw. ein System von Anlagen festgelegt, welches mindestens alle berührungslosen Identifikationsmedien RF-IM mit allen darin enthaltenen Applikationen (RF(C-App) und RF-App) erfasst und verwaltet. Zusätzlich können natürlich auch Kontaktapplikationen von Kontaktmedien C-IM und zugehörige Schreib/Lesestationen erfasst und verwaltet werden.

Für die Anwendung ergeben sich besondere Vorteile, wenn ein hierarchisches Autorisierungssystem A festgelegt wird, welches die Verwendung und Beschreibung der berührungslosen Identifikationsmedien RF-IM mit unabhängigen, gegenseitig nicht beeinflussbaren Applikationen sicherstellt, wobei die unabhängigen Inhaber der Applikationen ihre Applikationen jederzeit selbständig und unabhängig in die berührungslosen Identifikationsmedien RF-IM einschreiben und auch ändern können.

Ein solches Autorisierungssystem A ist z.B. in der WO97/34265 beschrieben für ein berührungsloses Kommunikationssystem mit berührungslosen Applikationen. Hier ist ein für alle Identifikationsmedien und alle zugeordneten Schreib- und Lesestationen gültiges hierarchisches Autorisierungssystem festgelegt, mit welchem jedes Identifikationsmedium initialisiert werden muss und mit welchen die gegenseitige Unbeeinflussbarkeit aller unabhängigen Applikationen sichergestellt ist und wobei ein vom Systeminhaber autorisierter unabhängiger Inhaber einer Applikation seine Applikation in neue Identifikationsmedien und in Identifikationsmedien, welche schon andere unabhängige Applikationen enthalten, jederzeit selbständig einschreiben kann. Dies auch unabhängig von der Zustimmung einer Zentralstelle des Systeminhabers.

Im Rahmen dieser Beschreibung werden die folgenden Bezeichnungen verwendet:
- C-: Kontakt -
- RF-: berührungslos -
- C-IM: Kontakt-Karten,-Identifikationsmedien, (Applikationsmedien)
- RF-IM: berührungslose Identifikationsmedien (Applikationsmedien)
- C-RF: Konvertermodul = 1 + 2 + 3
- C-RF-WR: RF-Schreib/Lesestation mit Konvertermodul
- C-RF-Plug: Konvertermodul als Einsteckmodul in C-WR
- C-WR: Kontaktkarten-Lesestation bzw. Schreib/Lesestation
- RF-WR: berührungslose Lesestation bzw. Schreib/Lesestation
- H: Hostcomputer
- K: Kommunikation
- I: Information
- K-C, I-C: Kontakt-Kommunikation und -Information
- K-RF, I-RF: berührungslose Kommunikation und Information
- RF-App: RF-Applikation
- C-App: Kontakt(karten)-Applikation
- RF(C-App): C-Applikation in RF-Sprache
- App-uP: Applikationsrechner
- cryp: Verschlüsselung der RF-Kommunikation
- shad: Schattenspeicher in RF-IM, C-RF-WR
- S: Kontaktkarten-Schnittstelle
- S(RF): Schnittstelle für berührungslose Kommunikation
- A: Autorisierungssystem
- UA: Unter-Autorisierungssystem
- AE: Autorisierungselement
- AE-RF: RF-Autorisierungselement
- AE-C: Kontakt-Autorisierungselement
- A-RF-IM: RF-Autorisierungsmedium
- A-C-IM: Kontakt-Autorisierungsmedium
- A-C-RF-WR: Autorisierungs-Schreib/Lesestation
- A-I: Autorisierungs-Information
- A-I-RF, A-I-C: RF- bzw. C-Autorisierungs-Information
- KW: Mittel zur Wahl der Kommunikationsart (C, Ci oder RF)
- N: Netzwerk
- Ini, (Ini): Initialisierung, initialisiert
- Ini-I: Initialisierungs-Informationen
- Ini-A-I: Ini-I im Rahmen eines Autorisierungssystems A
- (Ini-A): initialisiert im Rahmen von A
- (Ini-UA1): initialisiert im Rahmen von UA1
- Ini-RF-IM: berührungsloses Initialisierungs-Identifikationsmedium
- Ini-C-IM: Initialisierungs-Kontaktmedium
- 1: C-Kommunikationsteil
- 2: C/RF-Übersetzerteil
- 3: RF-Kommunikationsteil
- 4: RF-Sender/Empfänger
- 5: RF-Antenne
- 6: Kontakte zu C-WR
- 7: Anschlüsse zu S
- 8: Energieversorgung
- 9: Energiespeicher
- 10: Leistungssteuerung, -Verstärkung
- 11: Dialoggerät
- 12: Display
- 13: Eingabe-Tastatur
- 14: biometrische Erkennung, Sensor
- 15: PIN-Code
- 31-35: Ausbaustufen bezüglich RF-IM

## Patentansprüche

1. Verfahren zum Betrieb von berührungslosen Identifikationsmedien (RF-TM) in einem System mit einer Kontakt-Applikation (C-App) für Kontaktkarten (C-IM), **dadurch gekennzeichnet,**
**dass** ein initialisiertes (Ini) Konvertermodul (C-RF) zwischengeschaltet wird, welches einerseits eine berührungslose Kommunikation (K-RF) mit initialisierten (Ini) berührungslosen Identifikationsmedien (RF-IM) und andererseits eine Konktakt-Kommunikation (K-C) an einer Kontaktkarten-Schnittstelle (S) zu einem Hostcomputer (H) oder zu einem Applikationrechner (App-uP) einer Kontakt-Schreib/Lesestation (C-WR) ausführt zur Kommunikation mit einer Kontakt-Applikation (C-App) des Systems und welches die berührungslose Kommunikation (K-RF) bezüglich Kommunikationsregeln und Informationen (I-RF) in eine Kontakikommunikation (K-C) mit Kontakt-Informationen (I-C) übersetzt und umgekehrt und wobei die Initialisierung (Ini, Ini-A) im Rahmen eines hierarchischen Autorisierungssystems (A) festgelegt, verwaltet und ausgeführt wird.

2. Verfahren nach Anspruch 1, **dadurch gekennzeichnet dass** dem Konvertermodul (C-RF) auch ein Mittel (KW) zur Wahl der Kommunikationsart zwischen verschiedenen Arten von Kontaktkommunikationen (K-C1, K-C2) und berührungslosen Kommunikationen (K-RF1, K-RF2) aufweist.

3. Verfahren nach Anspruch 2, **dadurch gekennzeichnet, dass** die Kommunikationswahl entsprechend der Applikation (C1-App, C2-App, RF1-App, RF2-App) automatisch erfolgt.

4. Verfahren nach Anspruch 2, dadurch gekenntzeichnet, dass die Kommunikationswahl entsprechend einer Anfrage seitens des Hosts (H) oder des Applikationsrechners (App-uP) erfolgt.

5. Verfahren nach Anspruch 2, **dadurch gekennzeichnet, dass** die Kommunikationswahl entsprechend einer Anfrage seitens des Identifikationsmediums (RF-IM) erfolgt.

6. Verfahren nach Anspruch 1, **dadurch gekennzeichnet, dass** das Konvertermodul (C-RF) direkt an die Schnittstelle (S) angeschlossen und als initialisierte (Tni) berührungslose Schreib/Lesestation (C-RF-WR) ausgebildet ist.

7. Verfahren nach Anspruch 1, **dadurch gekennzeichnet, dass** das Konvertermodul (C-RF) als initialisiertes (Ini) Einsteckmodul (C-RF-Plug) in eine bestchende Kontakt-Schreib/Lesestation (C-WR) einsteckbar und als berührungslose Lesestation ausgebildet ist.

8. Verfahren nach Anspruch 1, **dadurch gekennzeichnet, dass** das Konvertermodul, (C-RF) von einer Kantakt-Applikation (C-App) aus einem zugeordneten Host (H) oder einem Applikationsrechner (App-uP) gemäss den Regeln und Protokolle einer standardisierten Kontakt-Kommunikation (K-C) mit standardisierten Kontakt-Informationen (J-C) angesteuert wird, und umgekehrt, und dass das Konvertermodul (C-RF) an die Kontakt-Applikation (C-App) gemäss den selben Regeln und Protokollen antwortet und umgekehrt.

9. Verfahren nach Anspruch 8, **dadurch gekennzeichnet, dass** das Konvertermodul (C-RF) nach Standardisierungsprotokollen gemäss nationalen oder internationalen Organisationen wie ISO, IEC, TEEE, ANSI, CEN oder CENELEC angesteuert wird und antwortet.

10. Verfahren nach Anspruch 1, **dadurch gekennzeichnet, dass** für Schreibvorgänge bei der berührungslosen Kommunikation (K-RF) vom Konvertermodul (C-RF) zu den berührungslosen Identifikationsmedien (RF-1M) Schattenspeicher (shad) in den Identifikationsmedien und/oder am Konvertermodul eingesetzt werden.

11. Verfahren nach Anspruch 1, **dadurch gekennzeichnet, dass** zum Einschreiben von Kontakt-Applikationen (C-App) in berührungslose Identifikationsmedien (RF-TM) eine Autorisierungs-Schreib/t,esestation (A-C-RF-WR) mit Konvertermodul, mit einem Autorisierungselement (AE) sowie mit Autorisierungsinformationen (A-I) eingesetzt werden.

12. Verfahren nach Anspruch 11, **dadurch gekennzeichnet, dass** ein Autorisierungselement (AE), welches die Autorisierungsinformationen (A-I) enthält, in der Autorisierungs-Schreib/Lesestation (A-C-RF-WR) eingebaut ist.

13. Verfahren nach Anspruch 11, **dadurch gekennzeichnet, dass** die Autorisierungsinformationen (A-1) mittels eines mobilen Kontakt-Autorisierungsmediums (A-C-IM) auf die Autorisierungs-Schreib/Lesestation (A-C-RF-WR) übertragen werden.

14. Verfahren nach Anspruch 11, **dadurch gekennzeichnet, dass** die Autorisicrungsinformationen (A-I) mittels eines mobilen berührungslosen Autorisierungsmediums (A-RF-IM) auf die Autorisierungs-Schreib/Lesestation (A-C-RF-WR) übertragen werden.

15. Verfahren nach Anspruch 11, **dadurch gekennzeichnet, dass** die Autorisierungs-informationen (A-I) über ein Netzwerk (N) an die Autorisierungs-Schreib/- Lesestationen (A-C-RF-WR) übertragen werden.

16. Konvertermodul zur berührungslosen Kommunikation (K-RF) mit initialisierten (Ini) berührungslosen Identifikationsmedien (RF-IM) in einem System mit einer Kontaktkarten-Applikation (C-App) und mit Kontaktkommunikationsregeln, **dadurch gekennzeichnet, dass** das Konvertermodul (C-RF) initialisiert ist (Ini)
und
- einerseits einen Teil (1) aufweist, welcher eine Kontaktkommunikation (K-C, I-C) an eine Kontaktkarten-Schnittstelle (S) zu einem Hostcomputer (H) oder zu einem Applikationsrechner (App-uP) einer Kontakt-Schreib/Lesestation (C-WR) ausführt
- andererseits einen Teil (3) aufweist, welcher die berührungslose Kommunikation (K-RF, T-RF) zu den berührungslosen Identifikationsmedien (RF-TM) ausführt
- und einen Teil (2) als Übersetzerteil (C/RF) aufweist, welcher die berührungslose Kommunikation (K-RF, I-RF) in die Kontaki-Kommunikation (K-C, I-C) übersetzt und wobei die Initialisierung (Ini, Ini-A) im Rahmen eines hierarchischen Autorisierungssystems (A) festgelegt, verwaltet und ausgeführt wird.

17. Konvertermodul nach Anspruch 16, **dadurch gekennzeichnet, dass** das Konvertermodul (C-RF) auch einen RF-Sender/Empfänger (4) mit einer Antenne (5) enthält zur berührungslosen Kommunikation (K-RF) mit berühruneslosen Identifikationsmedien (RF-IM).

18. Konvertermodul nach Anspruch 16, **dadurch gekennzeichnet, dass** ein Energiespeicher (9) vorgesehen ist.

19. Konvertermodul nach Anspruch 16, **dadurch gekennzeichnet, dass** Mittel zur autonomen Energieversorgung wie Batterien oder Solarzellen vorgesehen sind.

20. Konvertermodul nach Anspruch 16, dadurch gekenntzeichnet, dass Mittel zur Leistungssteuerung und -Verstärkung (10) vorgesehen sind.

21. Konvertermodul nach Anspruch 16, **dadurch gekennzeichnet, dass** dem Konvertermodul ein Dialoggerät (11) zur Ausführung von Applikationen zugeordnet ist.

22. Konvertermodul nach Anspruch 16, **dadurch gekennzeichnet, dass** das Dialoggerät (11) Elemente wie Display (12), Eingabetastatur (13), biometrische Erkennung (14), PIN Code (15) enthält.

23. Konvertermodul nach Anspruch 16, **dadurch gekennzeichnet, dass** dem Konvertermodul ein Applikationsrechner (App-uP) zugeordnet ist zur Ausführung einer Applikation (App), unabhängig von einer direkten Online-Verbindung zu einem Host (H).

24. Konvertermodul nach Anspruch 17, **dadurch gekennzeichnet, dass** der RF-Sender/Empfänger (4) eine Verschlüsselung (cryp) und/oder einen Schattenspeicher (shad) enthält.

25. Konvertermodul nach Anspruch 16, **dadurch gekennzeichnet, dass** das Konvertermodul eine Kontaktschnittstelle (S) zu Kontakt-Applikationen (C-App) aufweist und damit eine berührungslose Schreib/Lesestation (C-RF-WR) bildet.

26. Konvertermodul nach Anspruch 25, **dadurch gekennzeichnet, dass** die berührungslose Schreib/Lesestation (C-RF-WR) zusätzliche Mittel aufweist zur berührungslosen Kommunikation (K-RF, I-RF) mit berührungslosen Applikationen (RF-App) an einer Schnittstelle (S(RF)).

27. Konvertermodul nach Anspruch 16, **dadurch gekennzeichnet, dass** das Konvertermodul einen Kontakt (6) aufweist und als Einsteckmodul (C-RF-Plug) ausgebildet ist, welches in eine bestehende Kontakt-Schreib/Lesestation (C-WR) einsteckbar ist.

28. Konvertermodul nach Anspruch 16, **dadurch gekennzeichnet, dass** der RF-Kommunikationsteil (3, 4) zur berührungslosen Kommunikation mit berührungslosen Identifikationsmedien (RF-IM) ausgebildet ist, welche mehrere unabhängige Applikationen (App1, App2) enthalten.

29. Konvertermodul nach Anspruch 16, **dadurch gekennzeichnet, dass** das Konvertermodul (C-RF) in einen Applikationsrechner (App-uP) integriert ist.

30. Anlage mit einem Host (H), einer Kontaktschnittstelle (S), Kontakt-Schreib/- Lesestationen (C-WR) und Kontakt-Identifikationsmedien (C-IM), **dadurch gekennzeichnet, dass** initialisierte (Ini) Konvertermodule (C-RF) vorgesehen sind zur berührungslosen Kommunikation mit zusätzlichen initialisierten (Ini) berührungslosen Identifikationsmedien (RF-IM), wobei die Konvertermodule (C-RF) einerseits eine Kontaktkommunikation (K-C, I-C) an die Schnittstelle (S) des Kontaktsystems ausführen und andererseits eine berührungslose Kommunikation (K-RF, I-RF) zu den berührungslosen Identifikationsmedien (RF-IM) ausführen und welche die berührungslose Kommunikation in die Kontakt-Kommunikation übersetzen, und umgekehrt und wobei die Initialisierung (Ini, Ini-A) im Rahmen eines hierarchischen Autorisierungssystems (A) festgelegt, verwaltet und ausgeführt wird.

31. Anlage nacht Anspruch 30, **dadurch gekennzeichnet, dass** berührungslose Identifikationsmedien (RF-IM) mit mehreren unabhängigen Applikationen (App1, App2) vorgesehen sind, welche über die Konvertermodule (C-RF) mit den Applikationen kommunizieren.

32. Anlage nach Anspruch 30, **dadurch gekennzeichnet, dass** zusätzlich zum Kontaktsystem mit Kontakt-Applikationen (C-App) und Kontakt-Kommunikation (K-C, 1-C) an einer Schnittstelle (S) auch ein berührungsloses System mit berührungslosen Applikationen (RF-App) und berührungsloser Kommunikation (K-RF, I-RF) an einer Schnittstelle (S(RF)) vorgesehen ist mit berührungslosen Lesestationen (RF-WR) und mit berührungslosen Identifikationsmedien (RF-IM), welche mehrere unabhängige Applikationen (RF-App) enthalten.

33. Anlage nach Anspruch 30, **dadurch gekennzeichnet, dass** das hierarchische Autorisierungssystem (A) auch die berührungslosen Identifikationzmedien (RF-IM) mit allen darin enthaltenen Applikationen erfasst und verwaltet.

34. Anlage nach Anspruch 30, **dadurch gekennzeichnet, dass** das hierarchische Autorisierungssystem (A) die Verwendung und Beschreibung der berührungslosen Identifikationsmedien (RF-IM) mit unabhängigen, gegenseitig nicht beeinflussbaren Applikationen sicherstellt, wobei die unabhängigen Inhaber der Applikationen ihre Applikationen jederzeit selbständig und unabhängige in die berührungslosen Identifikationsmedien (RF-IM) einschreiben und auch ändern können.

35. Anlage nach Anspruch 30, **dadurch gekennzeichnet, dass** folgende Applikationen mit entsprechenden Dialoggeräten (11) vorgeschen sind: örtliche und zeitliche Zutrittskontrolle, Zugang zu Geräten der Informations- und Kommunikationstechnik (Computer, Bildtelefone) und zu IT-Anwendungen (Datenbanken, Netzwerke. Verschlüsselungstechniken), Kredit- und Wertkarten-Applikationen.

## Claims

1. Method for the operation of contact-less identification media (RF-IM) in a system with a contact application (C-App) for contact cards (C-IM), **characterised in that** an initialised (Ini) converter module (C-RF) is connected in series, which on the one hand carries out a contact-less communication (K-RF) with initialised (Ini) contact-less identification media (RF-IM) and on the other hand carries out a contact communication (K-C) at a contact card interface S to a host computer (H) or to an application computer (App-uP) of a contact read/write station (C-WR) for the communication with a contact application (C-App) of the system and which with respect to communication rules and information (I-RF) translates the contact-less communication (K-RF) into a contact communication (K-C) with contact information (I-C) and vice versa and wherein the initialisation (Ini, Ini-A) is defmed, administered and executed within the scope of a hierarchic authorisation system (A).

2. Method according to claim 1, **characterised in that** the converter module (C-RF) also comprises a means (KW) for the selection of the type of communication between different types of contact communications (K-C1, K-C2) and contact-less communications (K-RF1, K-RF2).

3. Method according to claim 2, **characterised in that** the selection of the communication is automatically implemented in correspondence with the application (C1-App, C2-App, RF1-App, RF2-App).

4. Method according to claim 2, **characterised in that** the selection of the communication is implemented in correspondence with a request from the side of the host (H) or of the application computer (App-uP).

5. Method according to claim 2, **characterised in that** the selection of the communication is implemented in correspondence with a request form the side of the identification medium (RF-IM).

6. Method according to claim 1, **characterised in that** the converter module (C-RF) is directly connected to the interface (S) and is implemented as an initialised (Ini) read/write station (C-RF-WR).

7. Method according to claim 1, **characterised in that** the converter module (C-RF) is implemented as an initialised (Ini) plug-in module (C-RF-Plug) capable of being plugged into an existing contact read/write station (C-WR) and as a contact-less reading station.

8. Method according to claim 1, **characterised in that** the converter module (C-RF) is driven by a contact application (C-App) from an assigned host (H) or an application computer (App-uP) according to the rules and protocols of a standardised contact communication (K-C) with standardised contact information (I-C), and vice versa, und that the converter module (C-RF) responds to the contact application (C-App) according to the same rules and protocols and vice versa.

9. Method according to claim 8, **characterised in that** the converter module (C-RF) is driven by and responds in accordance with standardisation protocols according to national or international organisations such as ISO, IEC, IEEE, ANSI, CEN or CENELEC.

10. Method according to claim 1, **characterised in that** for writing processes in case of the contact-less communication (K-RF) from the converter module (C-RF) to the contact-less identification media (RF-IM) shadow memories (shad) in the identification media and/or on the converter module are utilised.

11. Method according to claim 1, **characterised in that** for the registration of contact applications (C-App) in contact-less identification media (RF-IM) an authorisation read/write station (A-C-RF-WR) with a converter module, with an authorisation element (AE) as well as with authorisation information (A-I) are utilised.

12. Method according to claim 11, **characterised in that** an authorisation element (AE), which contains the authorisation information (A-I), is built into the authorisation read/write station (A-C-RF-WR).

13. Method according to claim 11, **characterised in that** the authorisation information A-I is transferred to the authorisation read/write station (A-C-RF-WR) by means of a mobile contact authorisation medium (A-C-IM).

14. Method according to claim 11, **characterised in that** the authorisation information (A-I) are transferred to the authorisation read/write station (A-C-RF-WR) by means of a mobile contact-less authorisation medium (A-RF-IM).

15. Method according to claim 11, **characterised in that** the authorisation information (A-I) is transferred to the authorisation read/write station (A-C-RF-WR) through a network (N).

16. Converter module for the contact-less communication (K-RF) with initialised (Ini) contact-less identification media (RF-IM) in a system with a contact card application (C-App) and with contact communication rules, **characterised in that** the converter module (C-RF) is initialised (Ini) and
- on the one hand comprises a part (1), which carries out a contact communication (K-C, I-C) at a contact card interface (S) to a host computer (H) or to an application computer (App-uP) of a contact read/write station (C-WR)
- on the other hand comprises a part (3), which carries out the contact-less communication (K-RF, I-RF) to the contact-less identification media (RF-IM)
- and comprises a part (2) as translation part (C/RF), which translates the contact-less communication (K-RF, I-RF) into the contact communication (K-C, I-C) and wherein the initialisation (Ini, Ini-A) is defined, administered and executed within the scope of a hierarchic authorisation system (A).

17. Converter module according to 16, **characterised in that** the converter module (C-RF) also comprises an RF-transmitter / receiver (4) with an antenna (5) for the contact-less communication (K-RF) with contact-less identification media (RF-IM).

18. Converter module according to claim 16, **characterised in that** an energy store (9) is provided.

19. Converter module according to claim 16, **characterised in that** means for the autonomous power supply such as batteries or solar cells are provided.

20. Converter module according to claim 16, **characterised in that** means for the power control and - amplification (10) are provided.

21. Converter module according to claim 16, **characterised in that** the converter module is assigned a dialogue device (11) for the execution of applications.

22. Converter module according to claim 16, **characterised in that** the dialogue device (11) comprises elements such as a display (12), input keyboard (13), biometric identification (14), PIN code (15).

23. Converter module according to claim 16, **characterised in that** the converter module is assigned an application computer (App-uP) for the execution of an application (App), independent of a direct on-line connection to a host (H).

24. Converter module according to claim 17, **characterised in that** the RF-transmitter / receiver (4) comprises an encryption (cryp) and/or a shadow memory (shad).

25. Converter module accord to claim 16, **characterised in that** the converter module comprises a contact interface (S) to contact applications (C-App) and with this forms a contact-less read/write station (C-RF-WR).

26. Converter module according to claim 25, **characterised in that** the contact-less read/write station (C-RF-WR) comprises additional means for the contact-less communication (K-RF, I-RF) with contact-less applications (RF-App) at an interface (S(RF)).

27. Converter module according to claim 16, **characterised in that** the converter module comprises a contact (6) and is implemented as a plug-in module (C-RF-Plug), which is capable of being plugged into an existing contact read/write station (C-WR).

28. Converter module according to claim 16, **characterised in that** the RF-communication part (3, 4) is implemented for the contact-less communication with contact-less identification media (RF-IM), which contain several independent applications (App1, App2).

29. Converter module according to claim 16, **characterised in that** the converter module (C-RF) is integrated in an application computer (App-uP).

30. Installation with a host (H), a contact interface (S), contact read/write stations (C-WR) and contact identification media (C-IM), **characterised in that** initialised (Ini) converter modules (C-RF) are provided for the contact-less communication with additional initialised (Ini) contact-less identification media (RF-IM), wherein the converter modules (C-RF) on the one hand carry out a contact communication (K-C, I-C) to the interface (S) of the contact system and on the other hand carry out a contact-less communication (K-RF, I-RF) to the contact-less identification media (RF-IM) and which translate the contact-less communication into the contact communication, and vice versa and wherein the initialisation (Ini, Ini-A) is defined, administered and executed within the scope of a hierarchic authorisation system (A).

31. Installation according to claim 30, **characterised in that** contact-less identification media (RF-IM) with several independent applications (App1, App2) are provided, which communicate with the applications through the converter modules (C-RF).

32. Installation according to claim 30, **characterised in that**, in addition to the contact system with contact applications (C-App) and contact communication (K-C, I-C) at an interface (S), also a contact-less system with contact-less applications (RF-App) and contact-less communication (K-RF, I-RF) at an interface (S(RF)) is provided with contact-less reading stations (RF-WR) and with contact-less identification media (RF-IM), which contain several independent applications (RF-App).

33. Installation according to claim 30, **characterised in that** the hierarchic authorisation system (A) also records and administers the contact-less identification media (RF-IM) with all applications contained therein.

34. Installation according to claim 30, **characterised in that** the hierarchic authorisation system (A) assures the utilisation and registration of the contact-less identification media (RF-IM) with independent, mutually non influenceable applications, wherein the independent proprietors of the applications are able at any time to autonomously and independently register and also change their applications in the contact-less identification media (RF-IM).

35. Installation according to claim 30, **characterised in that** the following applications with corresponding dialogue devices (11) are provided: local and temporal access control, access to devices of the information - and communications technology (computers, videophones) and to IT - applications (data bases, networks, encryption techniques), credit and cheque - or value card applications.

## Revendications

1. Procédé de gestion de supports d'identification sans contact (RF-IM) dans un système doté d'une application avec contact (C-App) pour cartes avec contact (C-IM), **caractérisé en ce que**
un module de conversion (C-RF) initialisé (Ini) est intercalé et exécute d'une part une communication sans contact (K-RF) avec des supports d'identification sans contact (RF-IM) initialisés (Ini) et d'autre part une communication avec contact (K-C) sur une interface (S) pour cartes avec contact avec un ordinateur-hôte (H) ou un calculateur d'application (App-uP) d'un poste d'écriture-lecture avec contact (C-WR) pour assurer une communication avec une application avec contact (C-App) du système et transfère la communication sans contact (K-RF) en termes de règles de communications et d'informations (I-RF) dans une communication avec contact (K-C) avec des informations avec contact (I-C) et inversement, l'initialisation (Ini, Ini-A) étant définie, gérée et exécutée dans le cadre d'un système hiérarchique d'autorisation (A).

2. Procédé selon la revendication 1, **caractérisé en ce que** le module de conversion (C-RF) présente également un moyen (KW) de sélection du mode de communication entre différents modes de communication avec contact (K-C1, K-C2) et de communication sans contact (K-RF1, K-RF2).

3. Procédé selon la revendication 2, **caractérisé en ce que** la sélection de communication s'effectue automatiquement en fonction de l'application (C1-App, C2-App, RF1-App, RF2-App).

4. Procédé selon la revendication 2, **caractérisé en ce que** la sélection de communication s'effectue en fonction d'une requête présentée par l'hôte (H) ou par le calculateur d'application (App-uP).

5. Procédé selon la revendication 2, **caractérisé en ce que** la sélection de communication s'effectue en fonction d'une requête présentée par le support d'identification (RF-IM).

6. Procédé selon la revendication 1, **caractérisé en ce que** le module de conversion (C-RF) est raccordé directement à l'interface (S) et est configuré comme poste d'écriture-lecture sans contact (C-RF-WR) initialisé (Ini).

7. Procédé selon la revendication 1, **caractérisé en ce que** le module de conversion (C-RF) peut être inséré comme module d'insertion (C-RF-Plug) initialisé (Ini) dans un poste existant d'écriture-lecture avec contact (C-WR) et est configuré comme poste de lecture sans contact.

8. Procédé selon la revendication 1, **caractérisé en ce que** le module de conversion (C-RF) est commandé par une application avec contact (C-App) provenant d'un hôte (H) ou d'un calculateur d'application (App-uP) qui lui sont associés, selon les règles et les protocoles d'une communication standard avec contact (K-C) avec des informations standard avec contact (I-C) et inversement et **en ce que** le module de conversion (C-RF) répond à l'application avec contact (C-App) selon les mêmes règles et les mêmes protocoles et inversement.

9. Procédé selon la revendication 8, **caractérisé en ce que** le module de conversion (C-RF) est commandé et répond selon des protocoles de normalisation définis par des organisations nationales ou internationales, par exemple ISO, IEC, IEEE, ANSI, CEN ou CENELEC.

10. Procédé selon la revendication 1, **caractérisé en ce que** des mémoires-ombres (shad) sont utilisées dans les supports d'identification et/ou sur le module de conversion pour les opérations d'écriture lors de la communication sans contact (K-RF) entre le module de conversion (C-RF) et les supports d'identification sans contact (RF-IM).

11. Procédé selon la revendication 1, **caractérisé en ce qu'**un poste d'écriture-lecture à autorisation (A-C-RF-WR) doté d'un module de conversion, d'un élément d'autorisation (AE) ainsi que d'informations d'autorisation (A-I) est utilisé pour l'écriture d'applications avec contact (C-App) dans les supports d'identification sans contact (RF-IM).

12. Procédé selon la revendication 11, **caractérisé en ce qu'**un élément d'autorisation (AE) qui contient les informations d'autorisation (A-I) est incorporé dans le poste d'écriture-lecture à autorisation (A-C-RF-WR).

13. Procédé selon la revendication 11, **caractérisé en ce que** les informations d'autorisation (A-I) sont transférées au poste d'écriture-lecture à autorisation (A-C-RF-WR) au moyen d'un support mobile d'autorisation avec contact (A-C-IM).

14. Procédé selon la revendication 11, **caractérisé en ce que** les informations d'autorisation (A-I) sont transférées au poste d'écriture-lecture à autorisation (A-C-RF-WR) au moyen d'un support mobile d'autorisation sans contact (A-RF-IM).

15. Procédé selon la revendication 11, **caractérisé en ce que** les informations d'autorisation (A-I) sont transférées au poste d'écriture-lecture à autorisation (A-C-RF-WR) par l'intermédiaire d'un réseau (N).

16. Module de conversion destiné à la communication sans contact (K-RF) avec des supports d'identification sans contact (RF-IM) initialisés (Ini) dans un système doté d'une application à carte avec contact (C-App) et de règles de communication avec contact,
**caractérisé en ce que**
le module de conversion (C-RF) est initialisé (Ini)
et
- présente d'une part une partie (1) qui exécute une communication avec contact (K-C, I-C) sur une interface (S) pour cartes avec contact avec un ordinateur-hôte (H) ou un calculateur d'application (App-uP) d'un poste d'écriture-lecture avec contact (C-WR),
- présente d'autre part une partie (3) qui exécute la communication sans contact (K-RF, I-RF) avec les supports d'identification sans contact (RF-IM),
- et une partie (2) qui sert de partie de conversion (C/RF) qui convertit la communication sans contact (K-RF, I-RF) en la communication avec contact (K-C, I-C),
l'initialisation (Ini, Ini-A) étant définie, gérée et exécutée dans le cadre d'un système hiérarchique d'autorisation (A).

17. Module de conversion selon la revendication 16, **caractérisé en ce que** le module de conversion (C-RF) contient également un émetteur-récepteur RF (4) doté d'une antenne (5) qui assure la communication sans contact (K-RF) avec le support d'indentification sans contact (RF-IM).

18. Module de conversion selon la revendication 16, **caractérisé en ce qu'**il présente un accumulateur d'énergie (9).

19. Module de conversion selon la revendication 16, **caractérisé en ce qu'**il présente des moyens d'alimentation autonome en énergie, par exemple des batteries ou des cellules solaires.

20. Module de conversion selon la revendication 16, **caractérisé en ce qu'**il présente des moyens de commande et d'amplification de puissance (10).

21. Module de conversion selon la revendication 16, **caractérisé en ce qu'**un appareil de dialogue (11) est associé au module de conversion pour exécuter des applications.

22. Module de conversion selon la revendication 16, **caractérisé en ce que** l'appareil de dialogue (11) contient des éléments tels qu'un affichage (12), un clavier d'introduction (13), une reconnaissance biométrique (14) ou un code PIN (15).

23. Module de conversion selon la revendication 16, **caractérisé en ce qu'**un calculateur d'application (App-uP) est associé au module de conversion pour exécuter une application (App) indépendamment d'une liaison directe en ligne avec un hôte (H).

24. Module de conversion selon la revendication 17, **caractérisé en ce que** l'émetteur-récepteur RF (4) contient un cryptage (cryp) et/ou une mémoire-ombre (shad).

25. Module de conversion selon la revendication 16, **caractérisé en ce que** le module de conversion présente une interface avec contact (S) avec les applications avec contact (C-App) et forme ainsi un poste d'écriture-lecture sans contact (C-RF-WR).

26. Module de conversion selon la revendication 25, **caractérisé en ce que** le poste d'écriture/lecture sans contact (C-RF-WR) présente des moyens supplémentaires qui assurent une communication sans contact (K-RF, I-RF) avec des applications sans contact (RF-App) sur une interface (S(RF)).

27. Module de conversion selon la revendication 16, **caractérisé en ce que** le module de conversion présente un contact (6) et est configuré comme module enfichable (C-RF-Plug) qui peut être inséré dans un poste d'écriture-lecture avec contact (C-WR).

28. Module de conversion selon la revendication 16, **caractérisé en ce que** la partie de communication RF (3, 4) est configurée pour assurer une communication sans contact avec des supports d'identification sans contact (RF-IM) qui contiennent plusieurs applications indépendantes (App1, App2).

29. Module de conversion selon la revendication 16, **caractérisé en ce que** le module de conversion (C-RF) est intégré dans un calculateur d'application (App-uP).

30. Installation dotée d'un hôte (H), d'une interface avec contact (S), d'un poste d'écriture-lecture avec contact (C-WR) et de supports d'identification avec contact (C-IM),
**caractérisée en ce que**
des modules de conversion (C-RF) initialisés (Ini) sont prévus pour assurer une communication sans contact avec d'autres supports d'identification sans contact (RF-IM) initialisés (Ini),
**en ce que** le module de conversion (C-RF) exécute d'une part une communication avec contact (K-C, I-C) sur l'interface (S) du système avec contact et d'autre part une communication sans contact (K-RF, I-RF) avec les supports d'identification sans contact (RF-IM) et convertisse la communication sans contact en une communication avec contact et inversement et **en ce que** l'initialisation (Ini, Ini-A) est définie, gérée et exécutée dans le cadre d'un système hiérarchique d'autorisation (A).

31. Installation selon la revendication 30, **caractérisée en ce qu'**elle présente des supports d'identification sans contact (RF-IM) dotés de plusieurs applications indépendantes (App1, App2) et qui communiquent avec les applications par l'intermédiaire des modules de conversion (C-RF).

32. Installation selon la revendication 30, **caractérisée en ce qu'**en plus du système avec contact avec applications avec contact (C-App) et applications avec contact (K-C, I-C) sur une interface (S), un système sans contact doté d'applications sans contact (RF-App) et d'une communication sans contact (K-RF, I-RF) est prévu sur une interface (S(RF)), avec des postes de lecture sans contact (RF-WR) et des supports d'identification sans contact (RF-IM) qui contiennent plusieurs applications différentes (RF-App).

33. Installation selon la revendication 30, **caractérisée en ce que** le système hiérarchique d'autorisation (A) saisit et gère également les supports d'identification sans contact (RF-IM) et toutes les applications qu'ils contiennent.

34. Installation selon la revendication 30, **caractérisée en ce que** le système hiérarchique d'autorisation (A) assure l'utilisation et la description des supports d'identification sans contact (RF-IM) dotés d'applications indépendantes ne s'influençant pas mutuellement, les détenteurs indépendants des applications pouvant écrire et également modifier à tout moment leurs applications de manière autonome et indépendante dans les supports d'identification sans contact (RF-IM).

35. Installation selon la revendication 30, **caractérisée en ce qu'**elle présente les applications suivantes dotées d'appareils de dialogue (11) appropriés : contrôle local et temporel d'accès, accès à des appareils de la technique d'information et de communication (ordinateurs, téléphones à écran d'image), à des applications IT (bases de données, réseaux, techniques de cryptage) et à applications de cartes de crédit et de paiement.
